# EUROPEAN PATENT APPLICATION

(11) **EP 3 819 598 A1**
(43) Date of publication of application: **12.05.2021**
(21) Application number: 18927946.6
(22) Date of filing: 27.07.2018
(51) Int. Cl.: G01D 5/34, H04B 10/00

(54) **OPTICAL TIME-DOMAIN REFLECTOMETER, AND OPTICAL ASSEMBLY HAVING OPTICAL TIME-DOMAIN REFLECTION FUNCTION**

(71) Applicant: HUAWEI TECHNOLOGIES CO., LTD., Shenzhen, Guangdong 518129 (CN)
(72) Inventor: KANG, Jingran, Shenzhen, Guangdong 518129 (CN); LIN, Huafeng, Shenzhen, Guangdong 518129 (CN); ZENG, Xiaofei, Shenzhen, Guangdong 518129 (CN); LI, Yuanmou, Shenzhen, Guangdong 518129 (CN)
(74) Representative: Thun, Clemens
(86) International application number: PCT/CN2018/097606
(87) International publication number: WO 2020/019327

(57) **Abstract**

This application provides an optical time domain reflectometer and an optical subassembly having an optical time domain reflectometry function. The optical time domain reflectometer includes a base and a light splitting film disposed on the base, where two opposite sides of the light splitting film are a transmission region and a reflection region respectively, and further includes a first laser and a detector, where the first laser and the detector are respectively located on two sides of the light splitting film. In addition, laser light emitted by the first laser is reflected out of the base by using the light splitting film, and laser light reflected or scattered in an optical fiber transmits through the light splitting film and then irradiates into the detector. As can be learned from the foregoing descriptions, when the first laser and the detector are packaged in one subassembly, detection laser light can be both emitted and received by using one subassembly, that is, an entire detection operation can be completed by using one component. This facilitates miniaturization of the optical time domain reflectometer and greatly reduces space occupied by the optical time domain reflectometer in a communications system.

## Description

### TECHNICAL FIELD

This application relates to the field of optical communications technologies, and in particular, to an optical time domain reflectometer and an optical subassembly having an optical time domain reflectometry function.

### BACKGROUND

An optical time domain reflectometer (Optical Time Domain Reflectometer, OTDR) is currently a main tool for monitoring quality of an optical distribution network (Optical Distribution Network, ODN) link, and generally includes a sending source and a detection part for receiving reflection information of a fiber link. To improve optical module competitiveness and reduce operation and maintenance costs, many manufacturers directly integrate an optical time domain reflectometry function into an optical module. Currently, there are two integration manners. One manner is to directly reuse a light source of a service-band transmit LD (Laser diode, laser diode) in an optical subassembly, and a receiver is an independent receive TO (Transmitter Outline can, used to package a laser or a receiver). The other manner is to use an independent wavelength solution for reception and transmission. However, an optical time domain reflectometer currently uses an independent TO package for both reception and transmission. Two extra TOs need to be added to integrate the optical time domain reflectometry function into an original subassembly, thereby increasing a subassembly size and coupling difficulty. A 10G EPON or combo PON module is generally a three-directional or four-directional subassembly, and also uses a TO solution based on space coupling. Originally, there are already three to four TOs. If the optical time domain reflectometry function is integrated, there are five or six TOs in the subassembly. As a result, subassembly design difficulty and costs increase sharply. As a result, it is difficult to integrate the optical time domain reflectometry function into a current subassembly.

### SUMMARY

This application provides an optical time domain reflectometer and an optical subassembly having an optical time domain reflectometry function, to simplify a structure of the optical subassembly having the optical time domain reflectometry function.

According to a first aspect, this application provides an optical time domain reflectometer. In the optical time domain reflectometer, a first laser and a detector are packaged in a subassembly. Specifically, the optical time domain reflectometer includes a base and a light splitting film disposed on the base, where two opposite sides of the light splitting film are a transmission region and a reflection region respectively; and further includes the first laser and the detector, where the first laser and the detector are respectively located in the transmission region and the reflection region of the light splitting film. If the first laser is located in the transmission region, the detector is located in the reflection region, or if the first laser is located in the reflection region, the detector is located in the transmission region. In addition, laser light emitted by the first laser is reflected or transmitted out of the base by using the light splitting film, and an optical fiber reflects or scatters, to the light splitting film, a part of the laser light emitted by the first laser, and irradiates the part of the laser light into the detector. As can be learned from the foregoing descriptions, when the first laser and the detector are packaged in one subassembly, detection laser light can be both emitted and received by using one subassembly, that is, an entire detection operation can be completed by using one component. This facilitates miniaturization of the optical time domain reflectometer and greatly reduces space occupied by the optical time domain reflectometer in a communications system.

A structure of the light splitting film includes a substrate, a light splitting membrane disposed on the substrate, and a pore layer that is disposed on the substrate and that is away from a side of the light splitting membrane, where holes whose diameters are less than a specified threshold are disposed on the pore layer. Only a hole area corresponding to a receive band is reserved below the substrate, and light of another band is blocked from directly entering the detector through another area of the light splitting film, to improve detection.

In addition, a cover cap covering the base is further included, and a cap lens is disposed on the cover cap. When the laser light emitted by the first laser is irradiated, the laser light is irradiated by the cap lens on the cover cap.

When the cover cap and the base are specifically disposed, the cover cap is made of a wave-absorbing material, and the base is made of a wave-absorbing material. The cover cap and the base are processed by using a wave-absorbing material, to reduce impact of stray light and improve a detection effect. A specific method is, for example, surface roughening, sand blasting, and then blackening processing.

When the light splitting film is specifically disposed, a ratio of a transmittance of the light splitting film to a reflectivity of the light splitting film may have different values. For example, the ratio of the transmittance of the light splitting film to the reflectivity of the light splitting film is 1:1. Certainly, different ratios such as 2:1 and 1:2 may be alternatively used.

When the light splitting film is specifically disposed, the light splitting film is disposed obliquely relative to a disposing surface of the first laser in the base. For example, the light splitting film is disposed at different angles such as 45° and 50° relative to the disposing surface of the first laser in the base.

To fasten the detector and the first laser, a step structure is disposed in the base, and the step structure has a first stepped surface and a second stepped surface, where the first laser is disposed on the first stepped surface, and the detector is disposed on the second stepped surface. When the detector and the first laser are disposed by using the step structure, the light splitting film may be conveniently placed.

In addition, the optical time domain reflectometer further includes a trans-impedance amplifier that is disposed on a same side as the detector and configured to amplify a signal detected by the detector. The trans-impedance amplifier amplifies the signal detected by the detector, to facilitate detection.

In addition, the optical time domain reflectometer further includes a backlight detector that is disposed on a same side as the first laser and configured to detect light intensity of the first laser, to monitor the first laser.

According to a second aspect, an optical subassembly having an optical time domain reflectometry function is further provided. The optical subassembly having the optical time domain reflectometry function includes the optical time domain reflectometer according to any one of the foregoing implementations and at least one packaged component. The optical time domain reflectometer is used to package one first laser and one detector into one TO, thereby simplifying a structure of the entire optical subassembly having the optical time domain reflectometry function.

To further simplify the structure of the optical subassembly having the optical time domain reflectometry function, different packaged components may be selected. The following lists specific implementations.

In a specific implementation, there are four packaged components, one second laser is packaged in each of two of the packaged components, the two second lasers emit laser light of different bands, one receiver is packaged in each of the other two packaged components, and the two receivers receive laser light of different bands.

In a specific implementation, there are two packaged components, two second lasers are packaged in one of the packaged components, the two second lasers emit laser light of different bands, and one receiver is packaged in the other packaged component.

In a specific implementation, there are three packaged components, one second laser is packaged in each of two of the packaged components, where the two second lasers emit laser light of different bands, two receivers are packaged in the remaining packaged component, and the two receivers receive laser light of different bands.

In a specific implementation, there are two packaged components, two second lasers are packaged in one of the packaged components, the two second lasers emit laser light of different bands, two receivers are packaged in the other packaged component, and the two receivers receive laser light of different bands.

In addition, a filter corresponding to the packaged component can simultaneously transmit light beams of bands corresponding to the second laser and the receiver. When two second lasers of different bands are used, the filter should be capable of simultaneously transmitting light beams corresponding to the two lasers. When two receivers are used, the filter should be capable of simultaneously transmitting light of bands of the two receivers. This further simplifies a structure of an entire apparatus.

### BRIEF DESCRIPTION OF DRAWINGS

FIG. 1 is a partial sectional view of an optical time domain reflectometer according to an embodiment of this application;
FIG. 2 is a cutaway view of an optical time domain reflectometer according to an embodiment of this application;
FIG. 3 is a schematic structural diagram of a base according to an embodiment of this application;
FIG. 4 is a schematic structural diagram of a light splitting film according to an embodiment of this application;
FIG. 5 is a cutaway view of another optical time domain reflectometer according to an embodiment of this application;
FIG. 6 is a schematic structural diagram of an optical subassembly having an optical time domain reflectometry function according to an embodiment of this application;
FIG. 7 is a schematic structural diagram of another optical subassembly having an optical time domain reflectometry function according to an embodiment of this application;
FIG. 8 is a schematic structural diagram of another optical subassembly having an optical time domain reflectometry function according to an embodiment of this application;
FIG. 9 is a schematic structural diagram of another optical subassembly having an optical time domain reflectometry function according to an embodiment of this application;
FIG. 10 is a schematic structural diagram of another optical subassembly having an optical time domain reflectometry function according to an embodiment of this application;
FIG. 11 is a schematic structural diagram of another optical subassembly having an optical time domain reflectometry function according to an embodiment of this application;
FIG. 12 is a schematic structural diagram of another optical subassembly having an optical time domain reflectometry function according to an embodiment of this application;
FIG. 13 is a schematic structural diagram of another optical subassembly having an optical time domain reflectometry function according to an embodiment of this application; and
FIG. 14 is a schematic structural diagram of another optical subassembly having an optical time domain reflectometry function according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of an optical time domain reflectometer provided in the embodiments of this application, the following first describes an application scenario of the optical time domain reflectometer. The optical time domain reflectometer is applied to monitor quality of an ODN link.

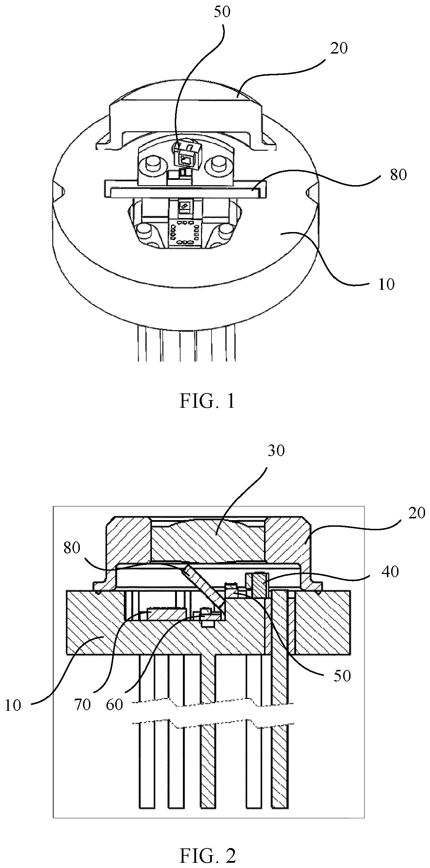

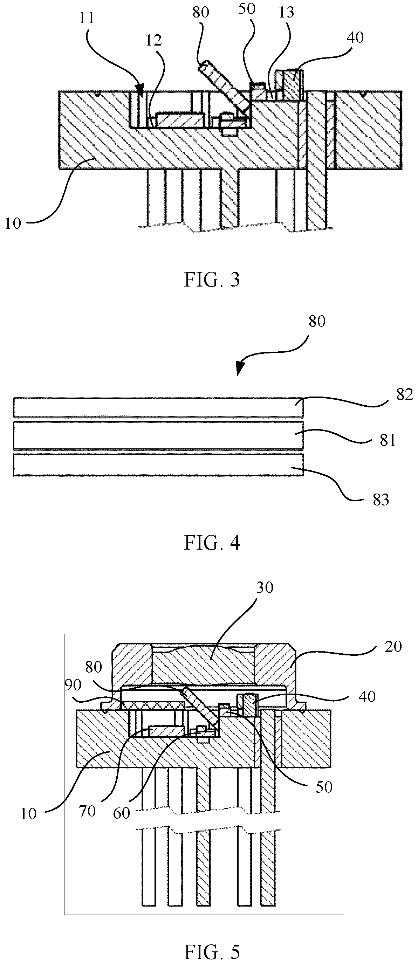

FIG. 1 is a schematic structural diagram of an optical time domain reflectometer according to an embodiment of this application. FIG. 2 is a cutaway view of an optical time domain reflectometer according to an embodiment of this application. The optical time domain reflectometer provided in this embodiment of this application includes a base 10, and the optical time domain reflectometer has a light emergent surface. Specifically, in a structure in FIG. 2, the light emergent surface is a cap lens 30 disposed on the base 10. During specific connection, a cover cap 20 covers the base 10, and the cap lens 30 is disposed on the cover cap 20. As shown in FIG. 3, a light splitting film 80 is disposed on the base 10. The base 10 is divided into two parts by the light splitting film 80, and the two parts respectively correspond to a reflection region and a transmission region of the light splitting film 80. A ratio of a transmittance of the light splitting film 80 to a reflectivity of the light splitting film 80 may have different values. For example, the ratio of the transmittance of the light splitting film 80 to the reflectivity of the light splitting film 80 is 1:1. Certainly, different ratios such as 2:1 and 1:2 may be alternatively used.

FIG. 4 is a schematic structural diagram of the light splitting film 80 according to an embodiment of this application. The light splitting film 80 includes a stacked multi-layer structure. A disposing direction of the light splitting film 80 shown in FIG. 2 is used as a reference direction, and the light splitting film 80 includes a substrate 81. To reduce impact of stray light, a mask structure may be added on the substrate 81. Specifically, a light splitting membrane 82 is disposed on the substrate 81, and the light splitting membrane 82 is directly plated on the substrate 81. A pore layer 82 receiving only light corresponding to a band is disposed below the substrate 81, to block light of another band. Holes whose diameters are less than a specified threshold are disposed on the pore layer 82, and when the holes are specifically provided, the holes on the pore layer 82 are provided in an array.

When the light splitting film 80 is disposed, the light splitting film 80 is disposed obliquely relative to the light emergent surface of the optical time domain reflectometer, and is located near an axis of the light emergent surface, as shown in FIG. 2 or FIG. 3. The light splitting film 80 is disposed obliquely, for example, disposed at different angles such as 45°, 40°, and 50° relative to a disposing surface of the first laser 50 in the base 10, so that a light beam reflected by the light splitting film 80 should be capable of passing through the cap lens 30 and transferring to an optical fiber. In addition, a light beam propagated from the optical fiber can also pass through the cap lens 30 and irradiate to the light splitting film 80. Alternatively, a light beam transmitted by the light splitting film 80 should be capable of passing through the cap lens 30 and transferring to the optical fiber, and a light beam propagated from the optical fiber can also pass through the cap lens 30 and irradiate to the light splitting film 80.

When being used, the light splitting film 80 is configured to reflect or transmit a light beam emitted by the first laser 50, and is configured to reflect or transmit a light beam in an optical fiber to the detector 60. During specific disposing, different selections may be made according to requirements. For example, when the light beam emitted by the first laser 50 is reflected to the optical fiber by the light splitting film 80, the first laser 50 is located in the reflection area, and the detector 60 is located in the transmission area. However, when the light beam emitted by the first laser 50 is transmitted to the optical fiber by the light splitting film 80, the first laser 50 is located in the transmission area, and the detector 60 is located in the reflection area. The following uses an example in which the first laser 50 is located in the reflection region and the detector 60 is located in the transmission region in FIG. 2 for description.

Still referring to FIG. 2 and FIG. 3, for ease of disposing the first laser 50 and the detector 60, a step structure is disposed on the base 10. As shown in FIG. 3, the step structure includes a first stepped surface 13 and a second stepped surface 12 that are parallel to each other. A disposing direction of the optical time domain reflectometer in FIG. 3 is used as a reference direction, a height of the first stepped surface 13 is higher than a height of the second stepped surface 12, and the first stepped surface 13 is configured to dispose the first laser 50. In addition, a light emergent surface of the first laser 50 is perpendicular to a light emergent surface of the optical time domain reflectometer and faces the light splitting film 80. To monitor light intensity of the first laser 50, a backlight detector 40 is further disposed. The backlight detector 40 may detect intensity of light emitted by the first laser 50. During specific disposing, the backlight detector and the first laser 50 are located on a same side of the light splitting film 80. In a structure shown in FIG. 3, the backlight detector 40 and the first laser 50 are both disposed on the first stepped surface 13, and a distance between the backlight detector 40 and the light splitting film 80 is greater than a distance between the first laser 50 and the light splitting film 80.

The second stepped surface 12 is a disposing surface of the detector 60, and an incident end of the detector 60 is parallel to the light emergent surface of the optical time domain reflectometer and faces the light splitting film 80. As shown in FIG. 2 and FIG. 3, the incident end of the detector 60 is located near an axis of a light emergent surface of the detector 60. In addition, a trans-impedance amplifier 70 is further disposed on the second stepped surface 12. The trans-impedance amplifier 70 and the detector 60 are located on a same side, and the trans-impedance amplifier 70 is connected to the detector 60. A signal collected by the detector 60 is amplified by the trans-impedance amplifier 70, to facilitate subsequent detection.

Still referring to FIG. 2 and FIG. 3, as can be learned from FIG. 3, when the first stepped surface 13 and the second stepped surface 12 are disposed in the base 10, the light splitting film 80 is disposed on a vertical surface between the first stepped surface 13 and the second stepped surface 12, and is disposed obliquely relative to the vertical surface. In this way, the first stepped surface 13 and the second stepped surface 12 are disposed on two sides of the light splitting film 80.

During using, after being reflected by the light splitting film 80, laser light emitted by the first laser 50 is irradiated to an optical fiber through the cap lens 30. After being reflected or scattered in the optical fiber, the light beam partially returns to the cap lens 30, and irradiates to the detector 60 by passing through the light splitting film 80. Link quality of the optical fiber is analyzed through subsequent processing. When the detector 60 receives a light beam, to reduce impact of stray light, during disposing, the cover cap 20 is made of a wave-absorbing material, and the base 10 is made of a wave-absorbing material. In this way, the cover cap 20 and the base 10 are processed by using a wave-absorbing material, to reduce impact of stray light and improve a detection effect. In addition, the cover cap 20 and the base 10 may be further processed by using surface roughening, sandblasting, and then blackening processing, to further improve a detection effect.

In addition, to further improve a detection effect, a cover plate 90 may be further disposed in the base 10. As shown in FIG. 4, the cover plate 90 is fastened in the base 10, and partially covers the cap lens 30, and only an area corresponding to the light splitting film 80 is reserved, to prevent other stray light from affecting the detector 60. When the cover plate 90 is specifically disposed, as shown in FIG. 4, a hollow cavity 11 in the base 10 is less than a cavity in the cover cap 20, so that a support surface is formed at a joint between the base 10 and the cover cap 20. The cover plate 90 is fastened on the support surface and covers a part of an opening of the hollow cavity 11, and only the area corresponding to the light splitting film 80 is reserved, to reduce a probability of irradiating stray light to the detector 60, and improve a detection effect of the detector 60. When the cover plate 90 is disposed, the cover plate 90 may also be produced by using a wave-absorbing material, and processed by using surface roughening, sandblasting, and then blackening processing.

It should be understood that the optical time domain reflectometer provided in this embodiment of this application is described above by using an example in which the first laser 50 is located in the reflection region and the detector 60 is located in the reflection region in FIG. 2. However, the optical time domain reflectometer provided in this embodiment of this application is not limited to the structure shown in FIG. 2, and an optical path may be further adjusted according to an actual requirement. For example, a receiving surface of the detector 60 is tilted to some extent, and locations of the detector 60 and the first laser 50 are exchanged, so that the first laser 50 is located in the transmission region and the detector 60 is located in the reflection region, and an angle of a disposing surface of a light reflecting film and a device in the reflection region is adjusted.

As can be learned from the foregoing descriptions, in the optical time domain reflectometer provided in this embodiment of this application, the first laser and the detector are disposed in a same TO, so that the structure of the optical time domain reflectometer can be simplified. In addition, the first laser and the detector 60 correspond to a same wavelength. The detector 60 receives laser light that is transferred back after laser light emitted by the first laser 50 is scattered or reflected in the optical fiber. Wavelengths of laser light reflected and refracted by the light splitting film are the same, thereby facilitating isolation and improving a detection effect.

In addition, an embodiment of this application further provides an optical subassembly having an optical time domain reflectometry function. The optical subassembly having the optical time domain reflectometry function includes the optical time domain reflectometer according to any one of the foregoing implementations and at least one packaged component. The optical time domain reflectometer is used to package one first laser and one detector into one TO, thereby simplifying a structure of the entire optical subassembly having the optical time domain reflectometry function.

In addition, to further simplify the structure of the optical subassembly having the optical time domain reflectometry function, different packaged components may be used to package a laser and a receiver corresponding to a service band. For example, there are four packaged components, one second laser is packaged in each of two of the packaged components, the two second lasers emit laser light of different bands, one receiver is packaged in each of the other two packaged components, and the two receivers receive laser light of different bands. Alternatively, there are two packaged components, two second lasers are packaged in one of the packaged components, the two second lasers emit laser light of different bands, and one receiver is packaged in the other packaged component. Alternatively, there are three packaged components, one second laser is packaged in each of two of the packaged components, the two second lasers emit laser light of different bands, two receivers are packaged in the remaining packaged component, and the two receivers receive laser light of different bands. Alternatively, there are two packaged components, two second lasers are packaged in one of the packaged components, the two second lasers emit laser light of different bands, two receivers are packaged in the other packaged component, and the two receivers receive laser light of different bands. When two second lasers of different bands are used, a filter should be capable of simultaneously transmitting light beams corresponding the two lasers. When two receivers are used, the filter should be capable of simultaneously transmitting light of bands of the two receivers. This further simplifies a structure of an entire apparatus. This is described below in detail by using specific embodiments.

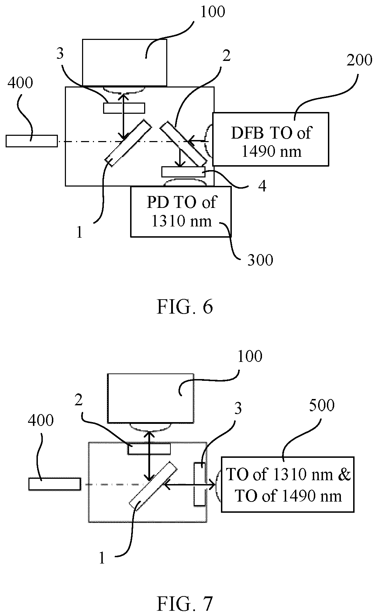

FIG. 6 shows an optical subassembly having an optical time domain reflectometry function. An optical time domain reflectometer 100 in the optical subassembly having the optical time domain reflectometry function is integrated with a single-fiber bidirectional subassembly, to implement a three-directional or bidirectional optical subassembly integrated with an optical subassembly function having the optical time domain reflectometry function. A current BOSA subassembly at a PON OLT end is used as an example. In this embodiment, there are two service bands. In FIG. 6 in this embodiment, a first band λ1 is a receive band of 1300 to 1320 nm at a GPON OLT end, a second band λ2 is a transmit band of 1480 to 1500 nm at the GPON OLT end, and a third wavelength λ3 is a transmit band and a receive band of the optical subassembly having the optical time domain reflectometry function. The first band λ1 is a band of laser light emitted by the second laser 200, the second band λ2 is a band of a receiver 300, and the third band λ3 is a band of laser light emitted by a first laser in the optical time domain reflectometer 100. A first filter 1 in FIG. 6 separates the third band from the remaining bands, and light of the third wavelength λ3 is reflected and light of the remaining bands is transmitted by the first filter 1. A third filter 3 transmits only light of λ3, to avoid crosstalk caused by light of another band to the receiver 300. The second filter 2 in FIG. 6 separates the first band from the second band, and reflects light of λ1 to the receiver 300. A fourth filter 4 allows only light of λ1 to pass through, and light of the second band directly transmits through the first filter 1 and the second filter 2. Each transmitter and each receiver 300 are coupled to an end face of an optical fiber 400 by using a cap.

To further improve subassembly integration, the second laser and the receiver may also be integrated into a packaged component 500. As shown in FIG. 7, a bidirectional TO is used to implement an optical subassembly that is at a PON OLT end and that is integrated with an optical subassembly function having an optical time domain reflectometry function, to further implement component miniaturization and reduce coupling difficulty. In FIG. 7, light of the first filter 1 reflects the light of the third band, and directly transmits service light. The second filter 2 further isolates the third band to avoid crosstalk to a receive end. The third filter 3 allows only the light of the third band to pass through. As can be learned from the foregoing descriptions, the optical time domain reflectometer 100 is used, so that mechanical parts of the entire optical subassembly having the optical time domain reflectometry function can be reduced. In addition, when the second laser and the receiver are packaged together into one packaged component, a structure of the entire optical subassembly having the optical time domain reflectometry function can be further reduced, and fewer filters are used.

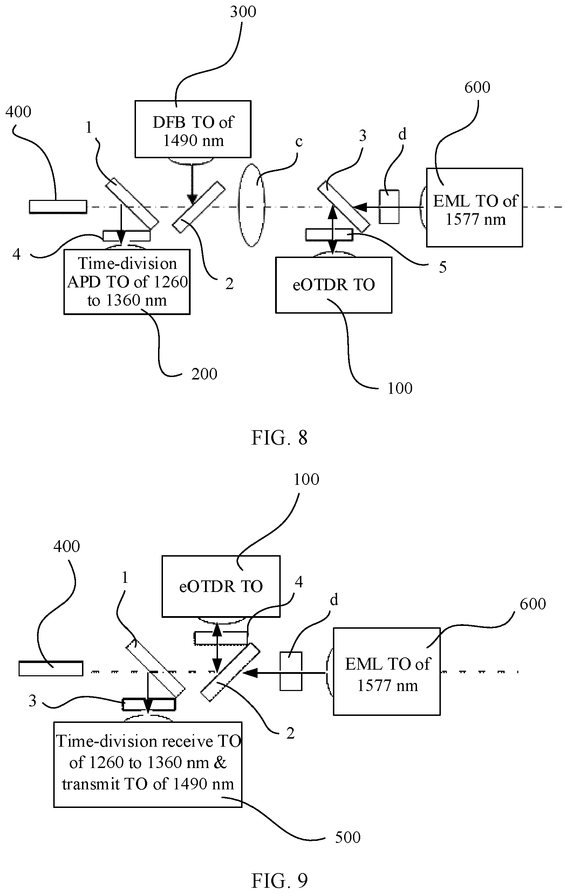

FIG. 8 shows a structure of another optical subassembly having an optical time domain reflectometry function. In a structure shown in FIG. 8, the optical time domain reflectometer 100 in FIG. 7 is integrated with an original three-directional subassembly, to implement a four-directional or three-directional optical subassembly having an optical subassembly function having an optical time domain reflectometry function. A current 10G EPON or combo PON time-division optical subassembly is used as an example. An original subassembly includes three-directional TOs: a DFB TO of 1490 nm, an EML TO of 1577 nm, and an APD TO of 1260 to 1360 nm. The integrated optical time domain reflectometer 100 is added to the original subassembly. In FIG. 8 in this embodiment, a first band λ1 is a receive band of 1260 to 1360 nm at a PON OLT end, a second band λ2 is a transmit band of 1480 to 1500 nm at the PON OLT end, a third band λ3 is a transmit band of 1575 to 1580 nm at a 10G PON OLT end, and a fourth wavelength λ4 is a transmit band and a receive band of the optical time domain reflectometer 100. The first band λ1 is a band corresponding to the receiver 200, the second band λ2 is a band of laser light emitted by a second laser 300, the third band λ3 is a band of laser light emitted by a second laser 600, and the fourth band λ4 is a band of laser light emitted by the first laser in the optical time domain reflectometer 100.

In this embodiment, integration may be performed in a manner shown in FIG. 8. The first filter 1 reflects light of the first band, and transmits light of another wavelength. The second filter 2 reflects light of the second band, and transmits light of the third band and the fourth band. The third filter 3 reflects light of the fourth band, and transmits light of the third wavelength. Still referring to FIG. 8, a lens is further disposed in FIG. 8. The lens is located between the second filter 2 and the third filter 3. The lens is a relay lens, to facilitate light of the third band and the fourth band to be coupled to the optical fiber 100. In addition, an isolator d is further disposed between the third filter 3 and the second laser 600.

To further improve subassembly integration, the receiver 300 and the second laser 200 may be integrated into one packaged component 500, as shown in FIG. 9. The first filter 1 reflects the light of the first band and the second band to the integrated packaged component 500, and directly transmits light of the remaining bands. The second filter 2 reflects light of the fourth wavelength to the integrated optical time domain reflectometer 100 of the optical subassembly having the optical time domain reflectometry function, and transmits the light of the third wavelength. The three-directional TO is used to implement the 10G EPON or combo PON time-division optical subassembly integrated with an optical subassembly function having the optical time domain reflectometry function.

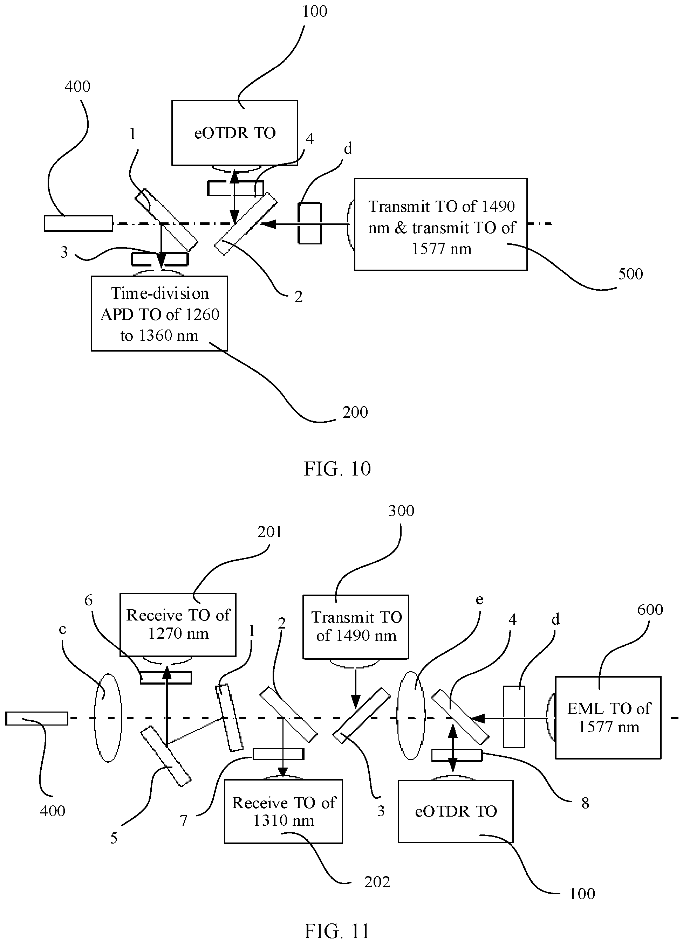

Alternatively, the second laser 200 and the second laser 600 may be integrated into one packaged component, as shown in FIG. 10. The first filter 1 reflects the light of the first band to the packaged component. The second filter 2 reflects the light of the fourth band, and directly transmits the light of the second band and the third band. The light of the second band and the third band is directly coupled to the optical fiber 100 by using a cap corresponding to the integrated TO.

As can be learned from FIG. 9 and FIG. 10, when the receiver 300 and one second laser 200 or one second laser 600 are packaged into one packaged component 500, filters can be reduced, and are reduced by one compared with a structure shown in FIG. 8. In addition, because a structure of an entire communications system is compact, no lens needs to be used for relaying, and structural parts of the communications system are further reduced.

As shown in FIG. 11, in a schematic diagram of an optical subassembly having an optical time domain reflectometry function, the optical time domain reflectometer 100 is integrated with an original four-directional subassembly, to implement the optical subassembly having the optical time domain reflectometry function. A current combo PON four-directional wavelength-division optical subassembly is used as an example. The combo PON wavelength-division subassembly requires coexistence of a GPON and an XG(S) PON. The subassembly includes a total of four TOs: two transmit TOs of a DFB TO of 1490 nm and an EML TO of 1577 nm, and two receive TOs of a TO of 1270 nm and a TO of 1310 nm. In this embodiment, there are four service bands. In FIG. 11 in this embodiment, a first band λ1 is a receive band of 1300 to 1320 nm at a GPON OLT end, a second band λ2 is a transmit band of 1480 to 1500 nm at the GPON OLT end, a third band λ3 is a receive band of 1260 to 1280 nm at an XG(S) PON OLT end, a fourth band λ4 is a transmit band of 1575 to 1580 nm at an XGPON OLT end, and a fifth wavelength λ5 is a transmit band and a receive band of the optical subassembly having the optical time domain reflectometry function. The first band λ1 is a band corresponding to a first receiver 201, the second band λ2 is a band of laser light emitted by the second laser 200, the third band λ3 is a band corresponding to a second receiver 202, the fourth band λ4 is a band of laser light emitted by the second laser 600, and the fifth band λ5 is a band of laser light emitted by the first laser in the optical time domain reflectometer 100.

During specific disposing, the optical time domain reflectometer 100 is integrated into the four-directional subassembly in a manner shown in FIG. 11. Because spacing between the first band and the third band is relatively small, a first lens c is disposed in the optical subassembly having the optical time domain reflectometry function in FIG. 11. The first lens c is disposed between the optical fiber 100 and the first filter 1. During specific disposing, the first lens c is a collimation lens, configured to convert light of the two bands into parallel split light, to facilitate subsequent light splitting by a WDM filter. In FIG. 11, the first filter 1 is a small-angle light splitting filter of 1270&1310 nm, configured to: separate light of the first band from light of another band, and reflect the light of the first band to a fifth filter 5. The fifth filter 5 is a reflection filter and is configured to divert light of 1270 nm to the first receiver 201. A sixth filter 6 transmits only the light of the first band. The second filter 2 separates the third band from the remaining bands, and reflects the light of the third band to the second receiver 202. A seventh filter 7 transmits only the light of the third band. The third filter 3 reflects light of the second band, and directly transmits light of the fourth band and the fifth band. The fourth filter 4 is configured to reflect the light of the fifth wavelength, and transmit the light of the fourth band. Because an optical path is relatively long, a second lens e is added to the middle of the optical path, to facilitate the light of the fourth band to be coupled to the light of the fifth band. When the second lens e is specifically disposed, the second lens e is disposed between the second filter 2 and the third filter 3. The optical time domain reflectometer 100 is added to the original four-directional optical subassembly to implement an optical subassembly having an independent wavelength and an optical time domain reflectometry function.

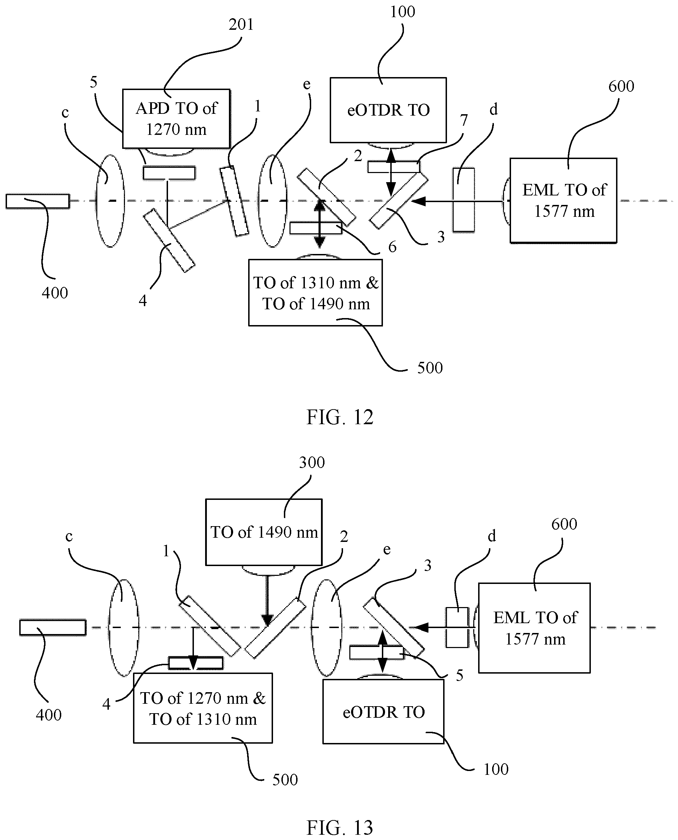

To further improve subassembly integration and reduce a component size, service bands may be integrated. In a specific implementation solution, the first receiver 201 and the second laser transmitter 300 may be optionally integrated into one packaged component. As shown in FIG. 12, the first lens c is a collimation lens of the optical fiber 100, to facilitate the light of the first band and the third band to be separated by the first filter 1. The first filter 1 is placed at a small angle, to reflect the light of the first band and transmit the light of the remaining bands. The second filter 2 reflects the light of the second band and the third band and transmits the light of the fourth band and the fifth band. The third filter 3 reflects the light of the fifth band and transmits the light of the fourth band. The fourth filter 4 reflects, to the optical time domain reflectometer 100, light reflected by the first filter 1. The second lens e is added to the subassembly, to facilitate the light of the fourth band and the fifth band to be coupled to the optical fiber 100.

To simplify a main optical path, two receivers may be integrated into one packaged component 500, that is, the first receiver 201 and the second receiver 202 are combined into one package component 500. As shown in FIG. 13, the first lens c is a collimation lens of the optical fiber 100, to facilitate the first band and the third band to be separated in the packaged component 500. The first filter 1 reflects the light of the first band and the third band, and transmits light of the remaining bands. The second filter 2 reflects the light of the second band, and transmits the light of the fourth band and the fifth band. The third filter 3 reflects the light of the fifth band and transmits the light of the fourth band. The second lens e is added to the subassembly, to facilitate the light of the fourth band and the fifth band to be coupled to the optical fiber 100.

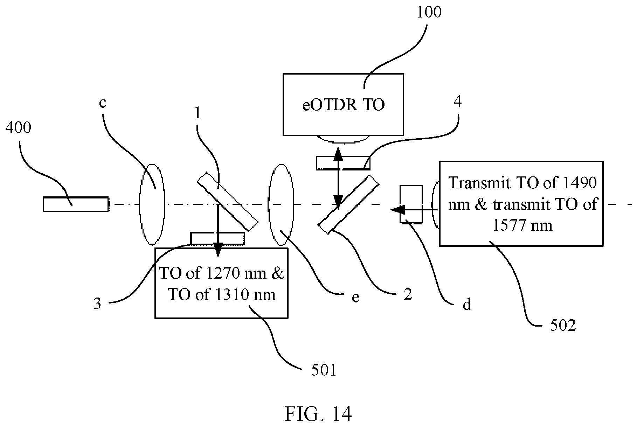

On the basis of the foregoing optical path, the second laser 200 and the second laser 600 may be alternatively integrated into a packaged component. As shown in FIG. 14, a four-service-band optical subassembly integrated with the optical subassembly function having the optical time domain reflectometry function may be implemented by using a three-directional optical path. In FIG. 14, the first receiver and the second receiver are packaged into a first packaged component 501, and the second laser 200 and the second laser 600 are packaged into a second packaged component 502. In addition, only three filters are needed when two packaged components are used. Compared with a structure shown in FIG. 12, fewer filters are used, a structure is relatively compact, and the structure of the optical subassembly having the optical time domain reflectometry function is simplified.

As can be learned from the descriptions of the foregoing specific implementations, the optical time domain reflectometer 100 is applied to the optical subassembly having the optical time domain reflectometry function, thereby effectively simplifying the structure of the optical subassembly having the optical time domain reflectometry function.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical time domain reflectometer, comprising a base and a light splitting film disposed on the base, wherein two opposite sides of the light splitting film are a transmission region and a reflection region respectively, and further comprising a first laser and a detector, wherein the first laser is located in the transmission region and the detector is located in the reflection region, or the first laser is located in the reflection region and the detector is located in the transmission region; and
laser light emitted by the first laser is reflected or transmitted out of the base by using the light splitting film, and an optical fiber reflects or scatters, to the light splitting film, a part of the laser light emitted by the first laser, and irradiates the part of the laser light into the detector.

2. The optical time domain reflectometer according to claim 1, wherein the light splitting film comprises a substrate, a light splitting membrane disposed on the substrate, and a pore layer that is disposed on the substrate and that is away from a side of the light splitting membrane, wherein holes whose diameters are less than a specified threshold are disposed on the pore layer.

3. The optical time domain reflectometer according to claim 1 or 2, further comprising: a cover cap covering the base, wherein a cap lens is disposed on the cover cap.

4. The optical time domain reflectometer according to claim 3, wherein the cover cap is made of a wave-absorbing material; and
the base is made of a wave-absorbing material.

5. The optical time domain reflectometer according to any one of claims 1 to 4, wherein a ratio of a transmittance of the light splitting film to a reflectivity of the light splitting film is 1:1.

6. The optical time domain reflectometer according to any one of claims 1 to 5, wherein the light splitting film is disposed obliquely relative to a disposing surface of the first laser in the base.

7. The optical time domain reflectometer according to any one of claims 1 to 6, wherein a step structure is disposed in the base, the step structure has a first stepped surface and a second stepped surface, the first laser is disposed on the first stepped surface, and the detector is disposed on the second stepped surface.

8. The optical time domain reflectometer according to any one of claims 1 to 7, further comprising a trans-impedance amplifier that is disposed on a same side as the detector and configured to amplify a signal detected by the detector.

9. The optical time domain reflectometer according to any one of claims 1 to 8, further comprising: a backlight detector that is disposed on a same side as the first laser and configured to detect light intensity of the first laser.

10. An optical subassembly having an optical time domain reflectometry function, comprising: the optical time domain reflectometer according to any one of claims 1 to 9 and at least one packaged component.

11. The optical subassembly having the optical time domain reflectometry function according to claim 10, wherein there is one packaged component, and a second laser transmitter and a receiver are packaged in the packaged component.

12. The optical subassembly having the optical time domain reflectometry function according to claim 10, wherein there are four packaged components, one second laser is packaged in each of two of the packaged components, the two second lasers emit laser light of different bands, one receiver is packaged in each of the other two packaged components, and the two receivers receive laser light of different bands.

13. The optical subassembly having the optical time domain reflectometry function according to claim 10, wherein there are two packaged components, two second lasers are packaged in one of the packaged components, the two second lasers emit laser light of different bands, and one receiver is packaged in the other packaged component.

14. The optical subassembly having the optical time domain reflectometry function according to claim 10, wherein there are three packaged components, one second laser is packaged in each of two of the packaged components, the two second lasers emit laser light of different bands, two receivers are packaged in the remaining packaged component, and the two receivers receive laser light of different bands.

15. The optical subassembly having the optical time domain reflectometry function according to claim 10, wherein there are two packaged components, two second lasers are packaged in one of the packaged components, the two second lasers emit laser light of different bands, two receivers are packaged in the other packaged component, and the two receivers receive laser light of different bands.
